# FASCICULE DE BREVET EUROPEEN

(11) **EP 3 956 640 B1**
(45) Date de publication et mention de la délivrance du brevet: **17.01.2024**
(21) Numéro de dépôt: 20723021.0
(22) Date de dépôt: 17.04.2020
(51) Int. Cl.: G01G 19/00, G01F 22/00, G01F 23/28, G01F 23/296, B05B 13/02, B05B 7/14, G01F 23/22, B05B 7/00

(54) **DISPOSITIF DE MESURE D'UNE MASSE D'UN CORPS ET PROCÉDÉS ASSOCIÉS**
VORRICHTUNG ZUM MESSEN EINER MASSE EINES KÖRPERS UND ZUGEHÖRIGE VERFAHREN
DEVICE FOR MEASURING A MASS OF A BODY, AND ASSOCIATED METHODS

(30) Priorité: 19.04.2019 FR 1904225
(43) Date de publication de la demande: 23.02.2022
(73) Titulaire: Exel Industries, 51200 Epernay (FR)
(72) Inventeur: FOUBERT, Guillaume, 75009 PARIS (FR); BROCHIER-CENDRE, Hervé, 75009 PARIS (FR); GHIO, Eric, 75009 PARIS (FR)
(74) Mandataire: Lavoix
(86) Numéro de dépôt international: PCT/EP2020/060810
(87) Numéro de publication internationale: WO 2020/212548

(56) Documents cités:
- EP-A1- 2 765 399
- US-A- 4 579 482
- US-A- 4 908 776
- US-A- 5 736 054
- US-A1- 2003 006 250
- US-A1- 2005 149 277

## Description

La présente invention concerne un dispositif de mesure de la masse d'un corps. La présente invention concerne également un procédé de mesure associé ainsi qu'un procédé de projection d'un produit associé.

Dans de nombreuses applications, il peut être souhaitable de mesurer la masse de corps qui sont soumis à un mouvement de vibration.

US 5 736 054 A décrit une méthode pour déterminer un paramètre de fonctionnement d'une centrifugeuse, comprenant un tambour mis en rotation par un arbre actionné par un moteur, et un accéléromètre.

US 4 908 776 A décrit un accéléromètre monté à bord d'un vaisseau spatial, à proximité d'un réservoir de carburant, pour estimer la quantité de carburant restant.

US 2005/0149277 A1 décrit des techniques de mesure fluidique, incluant l'introduction d'une vibration dans une paroi d'un contenant et la détection de la vibration pour déterminer un état du fluide.

Par exemple, des installations de projection de produits, notamment de produits de revêtement, comprennent en général un pulvérisateur destiné à projeter le produit, par exemple sur une ou plusieurs pièces à recouvrir, ainsi qu'une réserve du produit reliée au pulvérisateur par un ou plusieurs conduits. De telles installations sont notamment utilisées pour projeter ces produits sous forme de fluides tels que des liquides, ou de poudres.

Dans certains cas, les produits ainsi projetés sont peu fluides et tendent à mal s'homogénéiser dans la réserve. Par exemple, certains liquides très visqueux ou des poudres tendent à ne pas occuper immédiatement l'espace libéré par le produit qui a quitté la réserve pour être projeté. Ainsi, il peut arriver que l'extrémité du conduit aspirant le produit pour le conduire au pulvérisateur se retrouve au moins partiellement entourée d'une zone vide alors que la réserve n'est, elle, pas vide, puisque le produit aspiré n'a pas été remplacé dans la zone d'aspiration par du produit provenant du reste de la réserve. Il se produit alors une variation non souhaitée du débit de projection, pouvant aller jusqu' à une interruption de l'alimentation du pulvérisateur en produit à pulvériser.

Afin d'éviter qu'un tel phénomène se produise, il est connu de faire vibrer mécaniquement la réserve pendant la projection, de manière à faciliter le mouvement du produit dans la réserve et donc son homogénéisation. Ainsi, il est évité que l'alimentation du pulvérisateur en produit à projeter fluctue voire soit interrompue. De telles vibrations sont particulièrement utilisées pour des installations de projection de poudres.

Par ailleurs, il est souhaitable que l'opérateur de l'installation puisse aisément évaluer la quantité de produit restant dans la réserve, afin de faciliter l'organisation du travail et surtout de pouvoir remplir la réserve en temps utile de manière à éviter, là encore, une interruption inattendue de l'alimentation du pulvérisateur en produit à projeter. Pour cela, il est connu qu'une installation de projection de fluide, notamment de poudres, comprenne une balance permettant d'évaluer la masse de la réserve, et donc la quantité de produit restant.

Dans d'autres cas, des installations comportent des cuves dans lesquels des produits tels que des produits agro-alimentaires ou chimiques sont agités, par exemple dans le cadre de la préparation d'un produit transformé à partir de ces produits ou afin de faciliter l'écoulement du produit depuis la cuve vers une autre partie de l'installation.

Une centrale de distribution de poudre, propre à alimenter automatiquement une ou plusieurs autres installations avec de la poudre, est un autre exemple d'installation soumise à des vibrations et pour laquelle la masse d'un corps, ici la quantité de poudre restante, doit être mesurée.

Cependant, la mesure de la masse d'un corps en vibration est rendue très imprécise par les vibrations mécaniques auxquelles le corps est soumis. Par exemple, lorsque la masse est mesurée à partir de la mesure d'un déplacement causé par l'action du poids du corps sur un ressort ou un autre élément de rappel, la vibration fait varier continuellement la valeur de ce déplacement.

Il existe donc un besoin pour un dispositif de mesure de la masse d'un corps en vibration qui soit plus précis que les dispositifs de mesure de l'état de la technique.

A cet effet, il est proposé un dispositif de mesure d'une masse d'un corps, le dispositif comportant un support propre à supporter le corps, un bâti et un actionneur configuré pour faire vibrer le support par rapport au bâti, le dispositif comprenant un accéléromètre configuré pour mesurer des valeurs d'une accélération du support lors d'une vibration du support et un module électronique de contrôle configuré pour estimer la masse du corps à partir des valeurs d'accélération mesurées.

Le module de contrôle est configuré pour calculer des valeurs de vitesse du support par rapport au bâti à partir des valeurs d'accélération mesurées, et pour estimer la masse du corps à partir des valeurs de vitesse calculées.

Selon des modes de réalisation particuliers, le dispositif comporte une ou plusieurs des caractéristiques suivantes, prise(s) isolément ou selon toutes les combinaisons techniquement possibles :
- le module de contrôle est configuré pour déterminer une fréquence de vibration du support par rapport au bâti à partir des valeurs d'accélération mesurées, et pour estimer la masse du corps à partir de la fréquence de vibration déterminée.
- le module de contrôle est configuré pour déterminer la fréquence de vibration à partir des valeurs de vitesse calculées.
- le module de contrôle est configuré pour comparer la fréquence de vibration déterminée à au moins un premier seuil prédéterminé, et pour estimer la masse du corps en fonction de la comparaison.
- le module de contrôle est configuré pour générer, lorsque la fréquence est supérieure ou égale audit au moins un premier seuil, un signal à destination d'un utilisateur du dispositif.
- le module de contrôle est configuré pour comparer la fréquence de vibration déterminée à une pluralité de premiers seuils prédéterminés, et pour estimer la masse du corps en fonction de chaque comparaison.
- le module de contrôle est configuré pour calculer des valeurs de coefficients d'une transformée de Fourier des valeurs de vitesse calculées, et pour déterminer la fréquence de vibration à partir des valeurs de coefficients calculées.
- le module de contrôle est configuré pour :
   appliquer un filtrage passe-bande fréquentiel aux valeurs de vitesse calculées,
   calculer des valeurs de coefficients d'une transformée de Fourier des valeurs de vitesse filtrées,
   comparer une valeur absolue de chaque valeur de coefficient calculée à un deuxième seuil prédéterminé, et
   estimer la masse, notamment pour générer un signal à destination d'un utilisateur, en fonction du résultat de la comparaison.
- l'actionneur est configuré pour déplacer le support selon une direction par rapport au bâti lorsque l'actionneur fait vibrer le support, l'accéléromètre étant configuré pour mesurer des valeurs d'accélération du support selon ladite direction.
- le corps est une réserve d'un produit, le dispositif comportant, en outre, un projecteur configuré pour recevoir un flux du produit depuis la réserve et pour projeter le produit reçu, le produit étant notamment une poudre.

Il est également proposé un procédé de mesure d'une masse d'un corps, mis en oeuvre par un dispositif de mesure comportant un support supportant le corps, un bâti et un actionneur configuré pour faire vibrer le support par rapport au bâti, le procédé comportant des étapes de :
- mise en vibration, par l'actionneur, du support par rapport au bâti,
- mesure des valeurs d'une accélération du support lors de la vibration, et
- estimation, par un module électronique de contrôle, de la masse du corps à partir des valeurs d'accélération mesurées, le procédé comportant une étape de calcul de valeurs de vitesse du support par rapport au bâti à partir des valeurs d'accélération mesurées, la masse du corps étant estimée à partir des valeurs de vitesse calculées.

Il est également proposé un procédé de projection d'un produit, mis en oeuvre par un dispositif tel que défini précédemment, le support supportant une réserve du produit, le produit étant notamment une poudre, le procédé comportant des étapes de :
- circulation du produit depuis la réserve jusqu'au projecteur,
- projection, par le projecteur, du produit reçu, et
- mise en oeuvre d'un procédé de mesure de la masse d'un corps tel que défini précédemment, le corps étant la réserve de produit.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un exemple de dispositif selon l'invention,
[Fig 2] la figure 2 est un ordinogramme des étapes d'un procédé de projection d'un produit, mis en oeuvre par le dispositif de la figure 1,
[Fig 3] la figure 3 est un exemple de spectre fréquentiel mesuré lors du procédé de la figure 2, et
[Fig 4] la figure 4 est un deuxième exemple de spectre fréquentiel mesuré lors du procédé de la figure 2.

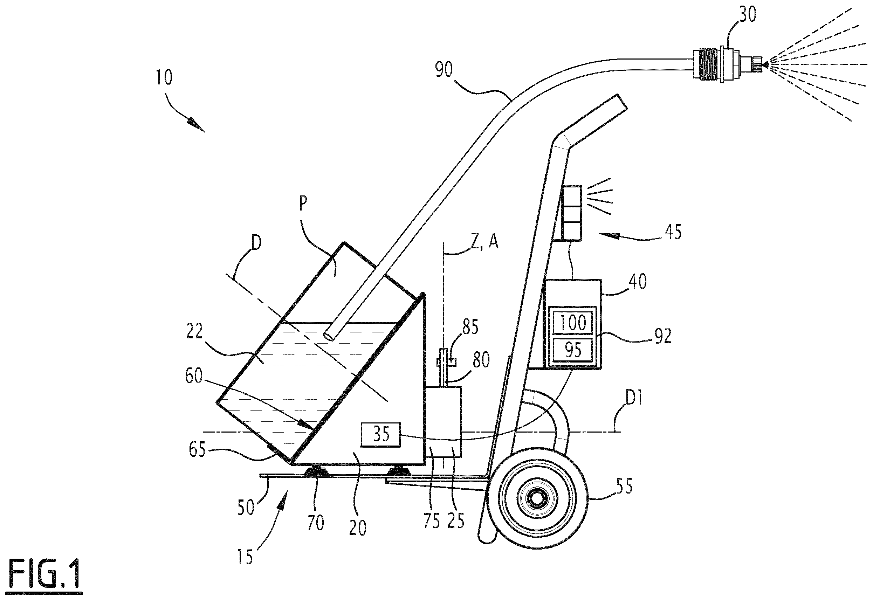

Un premier exemple de dispositif 10 de mesure d'une masse d'un corps 22 est représenté sur la figure 1.

Le dispositif comporte un bâti 15, un support 20 configuré pour supporter le corps 22, un actionneur 25, un accéléromètre 35, un module de contrôle 40 et un indicateur 45.

Le dispositif 10 va être décrit ci-dessous dans le cas où le dispositif 10 est un dispositif de projection d'un produit P. Dans ce cas, le dispositif de projection 10 comporte, en outre, un pulvérisateur 30. En outre, le corps 22 est, par exemple, une réserve du produit P.

Il est à noter que des variantes du dispositif 10 dans lequel le dispositif 10 n'est pas un dispositif de projection d'un produit P sont également envisageables. Dans ce cas, le dispositif 10 ne comporte pas de pulvérisateur 30.

Le dispositif de projection 10 est configuré pour projeter un produit P, notamment un produit de revêtement tel qu'une peinture ou un vernis.

Le produit P est, par exemple, sous forme de poudre. Par exemple, le produit P est un produit de revêtement sous forme de poudre, propre à fondre pour former une couche de produit de revêtement sur la surface d'une pièce lorsque la pièce portant une couche de la poudre est chauffée.

Le bâti 15 est, par exemple, configuré pour supporter le support 20, le corps 22, l'actionneur 25, le module de contrôle 40 et l'indicateur 45. Toutefois, des modes de réalisation dans lesquels au moins un élément parmi le support 20, le corps 22, l'actionneur 25, le module de contrôle 40 et l'indicateur 45 n'est pas supporté par le bâti 15 sont également envisageables.

Le bâti 15 comporte, par exemple, un châssis 50, notamment métallique, et des roues 55, ainsi qu'un organe de préhension 60, notamment une poignée, propre à permettre à un utilisateur de déplacer le dispositif 10.

En variante, le bâti 15 est un bâti fixe, par exemple une dalle de béton, ou tout autre type de bâti fixe.

Le support 20 est configuré pour supporter le corps 22. Ainsi, le bâti 15 supporte le corps 22 par l'intermédiaire du support 20.

Le support 20 est, par exemple, réalisé en un matériau métallique. En variante, le support 20 est réalisé au moins partiellement en une matière plastique, par exemple en un matériau composite.

Le support 20 comporte, par exemple, une face de support 60, et optionnellement une ou plusieurs cale(s) 65, également appelée(s) butoir(s).

Le support 20 est mobile par rapport au bâti 15. En particulier, le support 20 est configuré pour occuper, au repos et en l'absence de sollicitation mécanique externe, une position d'équilibre par rapport au bâti 15, et pour être déplacé par l'actionneur 25 vers au moins une position différente de la position d'équilibre.

Le support 20 est, par exemple, relié au bâti 15 par un ou plusieurs amortisseurs 70, réalisés notamment en un matériau élastomère. Chaque amortisseur 70 est, par exemple, interposé selon la direction verticale entre le bâti 15 et le support 20. Dans ce cas, la déformation du ou des amortisseur(s) 70 permet un déplacement relatif du support 20 par rapport au bâti 15.

En variante, le support 20 est suspendu au bâti 15 via le ou les amortisseurs 70. Selon une autre variante, le support 20 est monté sur le bâti 15 via une liaison pivot ou par un autre type de liaison mécanique permettant un déplacement relatif du support 20 par rapport au bâti 15.

La face de support 60 est prévue pour supporter le corps 22.

La face de support 60 est, par exemple, plane.

Selon l'exemple représenté, la face de support 60 forme, lorsque le dispositif 10 est en fonctionnement, un angle supérieur ou égal à 10 degrés (°) avec l'horizontale. Par exemple, une direction normale D, perpendiculaire à la face de support 60, forme un angle supérieur ou égal à 10° avec une direction verticale Z.

En particulier, l'angle entre la direction normale D et la direction verticale Z est compris entre 85 degrés(°) et 95°.

En variante, la face de support 60 est une face horizontale.

La ou les cale(s) 65 sont configurées pour empêcher un mouvement du corps 22 depuis une position dans laquelle le corps 22 est supporté par la face de support 60 jusqu'à une position où le corps 22 n'est pas supporté par la face de support 60. En particulier, chaque cale 65 est disposée sur un pourtour de la face de support 60 et forme une saillie à partir de la face de support 60. Par exemple, chaque cale 65 est disposée à une extrémité inférieure de la face de support 60, lorsque celle-ci forme un angle avec l'horizontale. Dans ce cas, chaque cale 65 est propre à empêcher le corps 22 de tomber de la face de support 60 sous l'effet de la gravité.

Le corps 22 est supporté par le support 20.

Le corps 22 est, notamment, amovible par rapport au support 20. Par exemple, le corps 22 est posé sur la face de support 60.

En variante, le corps 22 est fixé au support 20. Par exemple, le corps 22 est suspendu au support 20, par exemple via des crochets, ou encore fixé au support 20 par encliquetage.

Selon une autre variante, le corps 22 est venu de matière avec le support 20.

Il est à noter que le support 20 et le corps 22 sont susceptibles de prendre de nombreuses formes.

Une masse du corps 22 est susceptible d'être comprise, par exemple, entre 0 kilogramme (kg) et 25 kg.

Lorsque le dispositif 10 est un dispositif de projection de produit P, le corps 22 est une réserve du produit P. En d'autres termes, le corps 22 contient du produit P. Le corps 22 est, par exemple, un récipient tel qu'un baril, un carton, ou encore une bouteille. Lorsque le corps 22 est venu de matière avec le support 20, le corps 22 est formé par une partie creuse du support 20, qui est prévue pour être remplie du produit P.

L'actionneur 25 est configuré pour faire vibrer le support 20 par rapport au bâti 15. En particulier, l'actionneur 25 est configuré pour faire vibrer conjointement le support 20 et le corps 22 qui est supporté par le support 20, lorsque ce corps est présent.

Il est notamment entendu par « vibrer» un mouvement périodique ou pseudopériodique du support 20 par rapport au bâti 15. En d'autres termes, la vibration est une oscillation. La vibration présente, par exemple, une première fréquence temporelle comprise entre 0 Hertz (Hz) et 100 Hz, notamment comprise entre 40 Hz et 60 Hz.

L'actionneur 25 est configuré pour exercer sur le support 20 une force périodique présentant une deuxième fréquence. La force tend à déplacer le support 20 par rapport au bâti 15.

La deuxième fréquence est, par exemple, comprise entre 10 Hertz (Hz) et 100 Hz, notamment comprise entre 40 Hz et 60 Hz.

Il est à noter que la deuxième fréquence est susceptible d'être différente de la première fréquence. En particulier, du fait de l'inertie du support 20 et du corps 22, la force exercée par l'actionneur 25, qui présente la deuxième fréquence, entraîne une vibration du support 20 et du corps 22 avec une première fréquence différente de la deuxième fréquence. La première fréquence est, notamment, une fréquence propre de l'ensemble formé par le support 20, le corps 22 et le ou les élément(s), tels que l'actionneur 25 dans le mode de réalisation représenté sur la figure 1, qui sont solidaires du support 20 et du corps 22.

Une fréquence propre d'un objet ou d'un ensemble d'objets est notamment une fréquence à laquelle l'objet ou l'ensemble est susceptible de vibrer naturellement en l'absence de contraintes extérieures Par exemple, si l'objet ou l'ensemble est déplacé hors d'une position d'équilibre et laissé ensuite libre de se mouvoir jusqu'à avoir dissipé l'énergie amenée par ce déplacement initial, l'objet ou l'ensemble adoptera naturellement un mouvement pseudopériodique autour de sa position d'équilibre, à l'une de ses fréquences propres, jusqu'à finalement revenir à sa position d'équilibre statique.

Un objet ou ensemble d'objets est susceptible de présenter plusieurs fréquences propres correspondant notamment à des mouvements différents.

La première fréquence, comme de manière générale les fréquences propres, est fonction de la masse du support 20 et du corps 22.

Le mouvement du support 20 lors de la vibration est, par exemple, un mouvement dans un plan perpendiculaire à la direction verticale Z. En variante, le mouvement est un mouvement selon la direction verticale Z.

L'actionneur 25 est, par exemple, solidaire du support 20, notamment supporté par, en particulier suspendu au, support 20.

L'actionneur 25 comporte, par exemple, un moteur 75, notamment un moteur électrique, un arbre 80 et un lest 85.

Le moteur 75 est configuré pour faire pivoter l'arbre 80 autour de son axe A. Par exemple, le moteur 75 est configuré pour faire tourner l'arbre 80 autour de son axe A avec une fréquence comprise entre 10 Hz et 100 Hz, notamment comprise entre 40 Hz et 60 Hz.

Le lest 85 est fixé à l'arbre 80.

Le lest 85 présente un centre de gravité. Une distance entre l'axe A et le centre de gravité est strictement supérieure à zéro. Par exemple, la distance est comprise entre 5 millimètres (mm) et 500 mm.

Ainsi, lors de la rotation de l'arbre 80, le centre de gravité du lest 85 est mis en mouvement. En d'autres termes, le lest forme un balourd lors de la rotation de l'arbre 80. Il apparaît alors une force tendant à faire vibrer l'actionneur 25, et donc également le support 20.

En variante, l'actionneur 25 est interposé entre le bâti 15 et le support 20, et configuré pour exercer sur le bâti 15 et sur le support 20 une force périodique tendant à faire vibrer le support 20 par rapport au bâti 15.

Le pulvérisateur 30 est configuré pour recevoir un flux du produit P du corps 22 et pour projeter le produit P, par exemple sur une pièce que l'utilisateur souhaite recouvrir de produit P.

Le pulvérisateur 30 est, par exemple, un pulvérisateur électrostatique propre à imposer une différence de potentiel électrique entre le pulvérisateur 30 et la pièce à recouvrir.

Le pulvérisateur 30 est, par exemple, relié au corps 22 par un conduit 90 et configuré pour aspirer du produit P via le conduit 90.

L'accéléromètre 35 est configuré pour mesurer des valeurs d'une accélération du support 20. Par exemple, l'accéléromètre 35 est solidaire du support 20 et configuré pour mesurer des valeurs d'une accélération de l'accéléromètre 35.

L'accéléromètre 35 est, par exemple, configuré pour mesurer les valeurs d'accélération avec une fréquence de mesure temporelle comprise entre 35 Hertz (Hz) et 50 Hz. En particulier, un intervalle temporel entre deux instants temporels correspondant à deux valeurs mesurées successives est constant. En d'autres termes, la fréquence de mesure est constante. En variante, la fréquence de mesure est variable.

L'accéléromètre 35 est, par exemple, configuré pour mesurer des valeurs d'une accélération du support 20 selon une unique direction D1.

De préférence, la direction D1 est une direction selon laquelle une amplitude du mouvement du support 20 lors de la vibration est supérieure ou égale aux amplitudes du mouvement du support 20 dans les autres directions.

En particulier, la direction D1 est une direction telle que l'actionneur 25 est configuré pour exercer sur le support 20 une force tendant à déplacer le support 20 par rapport au bâti 15 selon cette direction.

La direction D1 est, par exemple, une direction perpendiculaire à l'axe A de l'arbre 80.

En variante, l'accéléromètre 35 est configuré pour mesurer des valeurs d'accélération du support 20 selon deux directions distinctes, notamment selon deux directions perpendiculaires l'une à l'autre. Par exemple l'accéléromètre 35 est configuré pour mesurer des valeurs d'accélération du support 20 selon deux directions perpendiculaires à l'axe A.

L'accéléromètre 35 est configuré pour transmettre les valeurs d'accélération mesurées au module de contrôle 40. Par exemple, l'accéléromètre 35 est relié au module de contrôle 40 par une liaison filaire, ou encore est configuré pour communiquer avec le module de contrôle 40 par ondes radiofréquence.

Le module de contrôle 40 est configuré pour estimer une masse du corps 22, notamment une masse de produit P dans le corps 22, à partir au moins des valeurs d'accélération mesurées par l'accéléromètre.

Par exemple, le module de contrôle 40 est configuré pour générer un signal, par exemple un signal à destination de l'utilisateur, dépendant de la masse du corps.

En particulier, le module de contrôle 40 est configuré pour déterminer, à partir au moins des valeurs d'accélération mesurées, la première fréquence, et pour estimer la masse à partir de la première fréquence déterminée.

Il est à noter que selon des variantes envisageables, le module de contrôle 40 est configuré pour estimer la masse de la réserve 22 à partir d'un autre paramètre que la première fréquence, par exemple à partir d'une valeur absolue d'au moins une valeur d'accélération, par exemple en comparant la valeur absolue à un seuil.

Le module de contrôle 40 comporte, par exemple, un module de calcul, un module de détermination, et un module d'estimation.

Le module de contrôle 40 comporte, notamment, une unité de traitement de données 92 comprenant un processeur 95 et une mémoire 100, dans laquelle des instructions logicielles sont stockées. Lorsque les instructions logicielles sont exécutées par le processeur 95, le module de calcul, le module de détermination et le module d'estimation sont formés.

En variante, le module de calcul, le module de détermination et le module d'estimation sont réalisés sous la forme de circuits intégrés dédiés, ou encore de circuits logiques programmables.

Le module de contrôle 40, est configuré pour calculer des valeurs de vitesse du support 20 à partir des valeurs d'accélération mesurées, et pour estimer la masse à partir des valeurs de vitesse calculées. Par exemple, le module de contrôle 40, notamment le module de calcul, est configuré pour calculer les valeurs de vitesse par intégration temporelle des valeurs d'accélération mesurées.

Le module de contrôle 40 est, notamment, configuré pour calculer des valeurs de vitesse du support 20 et pour déterminer la première fréquence à partir des valeurs de vitesse calculées. La détermination de la première fréquence est, notamment, effectuée par le module de détermination.

En variante, le module de contrôle 40, notamment le module de détermination, est configuré pour estimer la masse du corps 22 à partir d'une valeur absolue d'au moins une valeur de vitesse calculée, par exemple à partir du résultat de la comparaison de la valeur absolue à un seuil prédéterminé.

Le module de contrôle 40, notamment module de détermination, est configuré pour calculer des valeurs de coefficients d'une transformée de Fourier. La transformée de Fourier est, par exemple, une transformée de Fourier des valeurs de vitesse calculées.

En variante, la transformée de Fourier est une transformée de Fourier des valeurs d'accélération mesurées, ou encore de valeurs de déplacement du support 20 par rapport au bâti. Les valeurs de déplacement sont, notamment, des valeurs d'une distance du support 20 par rapport à la position d'équilibre. Les valeurs de déplacement sont, par exemple, calculées par le module de contrôle 40 à partir des valeurs d'accélération mesurées, en particulier par intégration temporelle des valeurs de vitesse calculées.

Le module de contrôle 40 est, par exemple, configuré pour calculer les valeurs de coefficients par transformée de Fourier rapide. La transformée de Fourier rapide, souvent désignée sous l'acronyme FFT, de l'Anglais « Fast Fourier Transform », est un algorithme de calcul d'une transformée de Fourier discrète.

Le module de contrôle 40 est configuré, de manière connue en soi, pour déterminer la première fréquence à partir des coefficients calculés.

Le module de contrôle 40, en particulier, le module d'estimation, est configuré, par exemple, pour estimer la masse du corps 22 en fonction d'une comparaison de la première fréquence avec au moins un seuil fréquentiel prédéterminé. En particulier, le module de contrôle 40 est configuré pour estimer la masse du corps 22 en fonction d'une comparaison de la première fréquence avec une pluralité de seuils fréquentiels.

Par exemple, le module d'estimation est configuré pour comparer la première fréquence à un premier seuil fréquentiel et à un deuxième seuil fréquentiel strictement supérieur au premier seuil fréquentiel.

Le module de contrôle 40 est, par exemple, configuré pour générer un premier signal si la première fréquence est supérieure ou égale au premier seuil fréquentiel. Le premier signal est, notamment, un signal prévu pour informer l'utilisateur que la masse du corps 22 est inférieure ou égale à une première valeur de masse.

Le premier seuil fréquentiel est, par exemple, compris entre 47 Hz et 50Hz. Par exemple, la première valeur de masse est égale à zéro, correspondant notamment à une réserve vide.

En complément facultatif, la module de contrôle 40 est configuré pour générer un deuxième signal si la première fréquence est strictement inférieure au premier seuil et supérieure ou égale au deuxième seuil.

Chaque signal généré par le module de contrôle 40 est, notamment, généré par le module d'estimation.

Le deuxième signal est, notamment, un signal prévu pour informer l'utilisateur que la masse estimée est strictement supérieure à la première valeur de masse et inférieure ou égale à une deuxième valeur de masse.

La deuxième valeur de masse est, par exemple, égale à 25 kg.

Le deuxième seuil est, par exemple, compris entre 37 Hz et 41 Hz.

Optionnellement, le module de contrôle 40 est, en outre, configuré pour générer un troisième signal si la première fréquence est inférieure strictement au deuxième seuil. Le troisième signal est, notamment, un signal prévu pour informer l'utilisateur que la masse du corps 22 est supérieure ou égale à la deuxième valeur de masse.

Le module de contrôle 40 est configuré pour transmettre le premier, deuxième ou troisième signal à l'indicateur 45.

Par exemple, le module de contrôle 40 est configuré pour estimer la masse du corps 22 avec une période temporelle, et pour émettre un signal à destination de l'utilisateur, notamment le premier, deuxième ou troisième signal, avec la période temporelle.

L'indicateur 45 est configuré pour convertir le signal reçu du module de contrôle 40 en un signal compréhensible par l'utilisateur.

Par exemple, l'indicateur 45 est configuré pour émettre un signal visuel dépendant du signal reçu. Le signal visuel est, par exemple, une lampe allumée ou éteinte.

Selon un mode de réalisation, l'indicateur 45 est configuré pour allumer l'une parmi trois lampes selon que le premier signal, le deuxième signal ou le troisième signal est reçu.

En variante, l'indicateur 45 est configuré pour émettre un signal sonore en fonction du signal reçu.

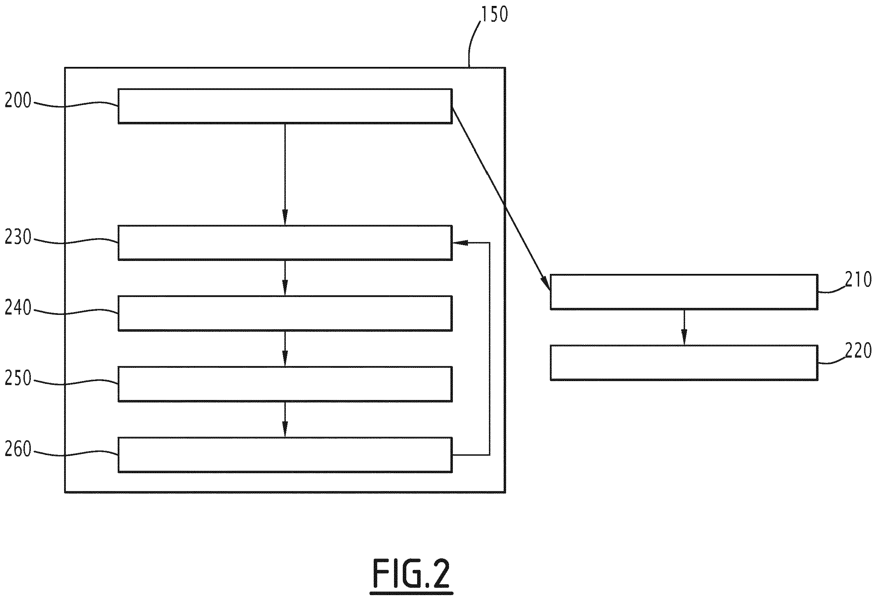

Le fonctionnement du dispositif 10 va maintenant être décrit en référence à la figure 2, qui est un ordinogramme des étapes d'un procédé 150 de mesure de la masse du corps 22 mis en oeuvre par le dispositif 10.

Le procédé de mesure 150 comporte une étape 200 de vibration, une étape 230 de mesure, une étape 240 de calcul, une étape 250 d'estimation et une étape 260 de signalisation.

Par exemple, le procédé de mesure 150 est intégré dans un procédé de projection du produit P, qui est décrit ci-après. Le procédé de projection comporte, en outre, une étape 210 de circulation et une étape 220 de projection.

Lors de l'étape de vibration 200, l'actionneur 25 fait vibrer le support 20 et le corps 22 par rapport au bâti 15. Par exemple, l'utilisateur met en route l'actionneur 25.

Le mouvement de vibration est, notamment, maintenu pendant l'étape 210 de circulation, l'étape 220 de projection, l'étape 230 de mesure, l'étape 240 de calcul, l'étape 250 d'estimation et l'étape 260 de signalisation.

Au cours de l'étape de circulation 210, le produit P circule dans le conduit 90 depuis le corps 22 jusqu'au pulvérisateur 30. Le produit P reçu par le pulvérisateur 30 est projeté par le pulvérisateur 30, par exemple sur une pièce que l'utilisateur souhaite recouvrir au moins partiellement de produit P, au cours de l'étape de projection 220.

L'étape de mesure 230 comprend la mesure d'au moins une valeur d'accélération du support 20 par l'accéléromètre 35. Par exemple, une unique valeur d'accélération est mesurée. En variante, des valeurs d'accélération sont mesurées à des instants temporels successifs, avec la fréquence de mesure.

Les valeurs d'accélération mesurées sont transmises au module de contrôle 40.

L'étape de calcul 240 comporte le calcul de valeurs de vitesse, à partir des valeurs d'accélération mesurées, par le module de contrôle 40.

Les valeurs de vitesse sont calculées par intégration temporelle des valeurs d'accélération.

Lors de l'étape d'estimation 250, le module de contrôle 40 estime la masse du corps 22 à partir des valeurs d'accélération, notamment à partir des valeurs de vitesse.

En particulier, le module de contrôle 40 détermine la première fréquence à partir des valeurs de vitesse calculées, et estime la masse à partir de la première fréquence déterminée.

Le module de contrôle 40 détermine notamment la première fréquence à partir de valeurs de coefficients d'une transformée de Fourier des valeurs de vitesse.

Le module de contrôle 40 compare notamment la première fréquence au moins au premier seuil fréquentiel, optionnellement au deuxième seuil fréquentiel, et génère un message à destination de l'utilisateur en fonction au moins du résultat de la comparaison.

Par exemple, le module de contrôle 40 génère le premier, deuxième ou troisième message en fonction du résultat de la comparaison.

Le message généré est transmis à l'indicateur 45 lors de l'étape de signalisation 260. L'indicateur convertit alors le message généré par le module de contrôle 40 en message compréhensible par l'utilisateur.

L'étape 230 de mesure, l'étape 240 de calcul, l'étape 250 d'estimation et l'étape 260 de signalisation sont, notamment, répétées dans cet ordre pendant l'étape 200 de vibration, l'étape 210 de circulation, et l'étape 220 de projection.

Grâce à l'invention, la masse du corps 22 est estimée de manière plus précise que par les dispositifs de l'état de la technique. En effet, les mesures d'accélération ne sont pas impactées par la vibration du support 20 et du corps 22 comme peuvent l'être les mesures de masse par des balances.

Du fait des valeurs de masse et des première et deuxième fréquences généralement utilisées, la vitesse de déplacement du support 20 varie de manière importante lorsque la masse du corps 22 diminue lors du fonctionnement du dispositif 10. L'estimation de la masse à partir des valeurs de vitesse est donc plus précise qu'à partir des valeurs d'accélération directement.

L'estimation de la masse à partir de la fréquence de vibration est également particulièrement précise. En effet, la fréquence de vibration (i.e la première fréquence) dépend de la masse de l'ensemble formé par le corps 22 et par le support 20, et est susceptible de varier de manière importante entre une configuration où le corps 22 est rempli de produit P et une configuration où le corps 22 est vide.

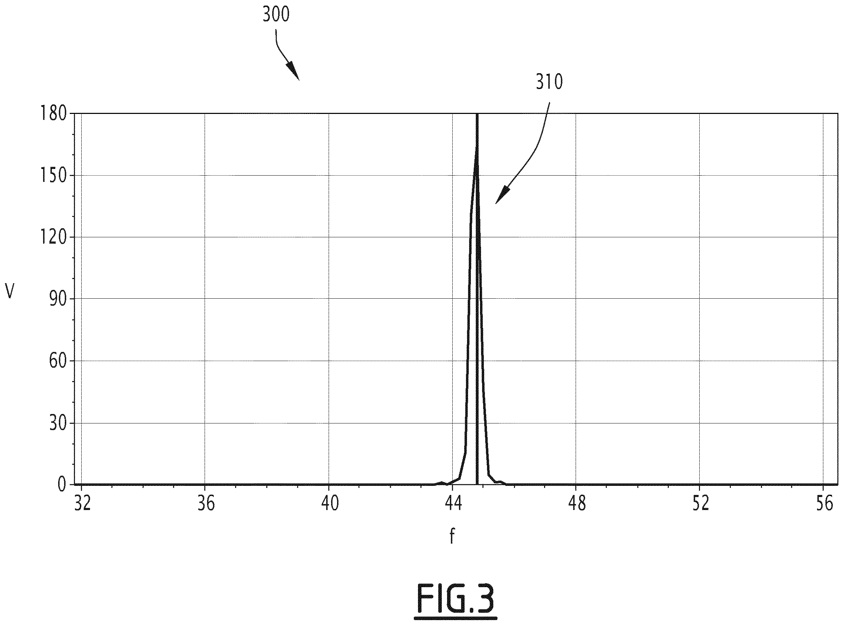

Par exemple, un premier exemple de spectre fréquentiel 300 représentant les valeurs de vitesse v (en millimètres par seconde) calculées en fonction de la fréquence f associée (en hertz) est représenté sur la figure 3. Ce premier exemple de spectre 310 correspond à un corps 22 posé sur le support 20 et présentant une masse de 5 kilogrammes. On y voit un pic 310 entré autour d'une fréquence de 44,82 Hz. On en déduit que, lorsque la première fréquence est égale à 44,82 Hz, la masse du corps 22 est égale à 5 kilogrammes.

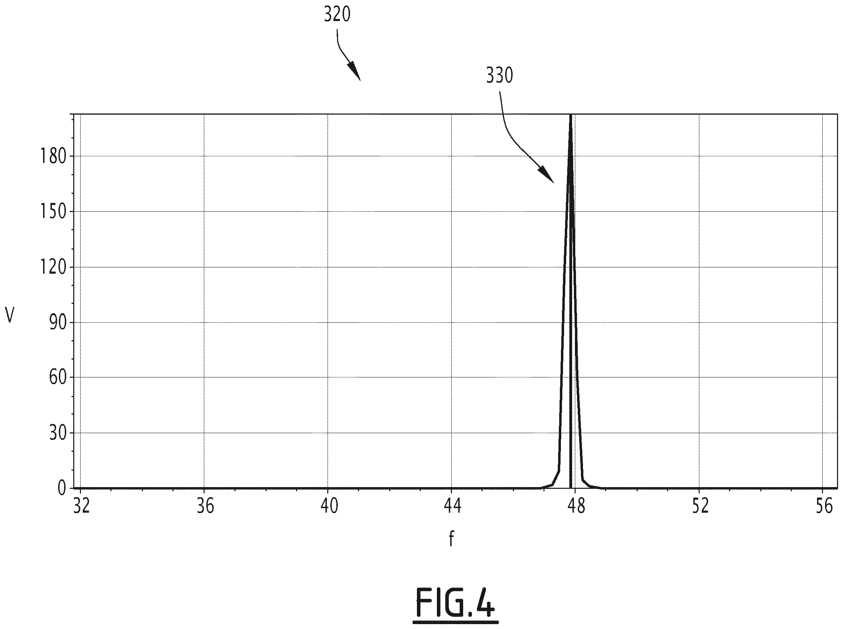

Un deuxième exemple de spectre fréquentiel 320 représentant les valeurs de vitesse v (en millimètres par seconde) calculées en fonction de la fréquence f associée (en hertz) est représenté sur la figure 4. Ce deuxième exemple de spectre correspond à un support 20 ne supportant aucun corps 22, donc à une masse nulle du corps 22. On y voit un pic 330 entré autour d'une fréquence de 47,87 Hz. On en déduit que, lorsque la première fréquence est égale à 47,87 Hz, la masse du corps 22 est égale à zéro.

Comme on peut le voir de la comparaison des spectres 300 et 320, une variation de la masse du corps 22 se traduit par une variation importante de la première fréquence.

La comparaison de la première fréquence au premier seuil fréquentiel est une manière simple d'estimer la masse du corps 22. Lorsque la première fréquence est comparée à plusieurs seuils fréquentiels, l'estimation de la masse est plus précise.

Le calcule de coefficients d'une transformée de Fourier est une manière efficace et rapide de déterminer une fréquence.

Un deuxième exemple de dispositif 10 va maintenant être décrit. Les éléments identiques au premier exemple de dispositif 10 ne sont pas décrits à nouveau. Seules les différences sont mises en évidence.

Le module de contrôle 40 est configuré pour appliquer un filtrage fréquentiel aux valeurs de vitesse calculées afin d'obtenir des valeurs de vitesse filtrées.

Le filtrage est, par exemple, un filtrage passe-bande. En variante, le filtrage est un filtrage passe-haut

Le module de contrôle 40 est en outre configuré pour calculer les valeurs de coefficients de la transformée de Fourier à partir des valeurs de vitesse filtrées.

Le module de contrôle 40 est, de plus, configuré pour comparer les valeurs de coefficients à un seuil de coefficients, et pour estimer la masse en fonction du résultat de la comparaison.

Par exemple, le module de contrôle 40 est configuré pour générer le premier signal lorsqu'au moins un coefficient présente une valeur absolue supérieure ou égale au seuil de coefficients.

Le deuxième exemple présente l'avantage de permettre un temps de traitement réduit des valeurs d'accélération, et ainsi d'accélérer l'émission du ou des signaux. Ainsi, la mesure de masse est plus précise.

## Revendications

1. Dispositif (10) de mesure d'une masse d'un corps (22), le dispositif (10) comportant un support (20) propre à supporter le corps (22), un bâti (15) et un actionneur (25) configuré pour faire vibrer le support (20) par rapport au bâti (15),
le dispositif (10) comprenant un accéléromètre (35) configuré pour mesurer des valeurs d'une accélération du support (20) lors d'une vibration du support (20) et un module électronique de contrôle (40) configuré pour estimer la masse du corps (22) à partir des valeurs d'accélération mesurées,
**caractérisé en ce que** le module de contrôle (40) est configuré pour calculer des valeurs de vitesse du support (20) par rapport au bâti (15) à partir des valeurs d'accélération mesurées, et pour estimer la masse du corps (22) à partir des valeurs de vitesse calculées.

2. Dispositif selon la revendication 1, dans lequel le module de contrôle (40) est configuré pour déterminer une fréquence de vibration du support (20) par rapport au bâti (15) à partir des valeurs d'accélération mesurées, et pour estimer la masse du corps (22) à partir de la fréquence de vibration déterminée, dans lequel le module de contrôle (40) est configuré pour déterminer la fréquence de vibration à partir des valeurs de vitesse calculées.

3. Dispositif selon la revendication 2, dans lequel le module de contrôle (40) est configuré pour comparer la fréquence de vibration déterminée à au moins un premier seuil prédéterminé, et pour estimer la masse du corps (22) en fonction de la comparaison.

4. Dispositif selon la revendication 3, dans lequel le module de contrôle (40) est configuré pour générer, lorsque la fréquence est supérieure ou égale audit au moins un premier seuil, un signal à destination d'un utilisateur du dispositif (10).

5. Dispositif selon la revendication 4, dans lequel le module de contrôle (40) est configuré pour comparer la fréquence de vibration déterminée à une pluralité de premiers seuils prédéterminés, et pour estimer la masse du corps (22) en fonction de chaque comparaison.

6. Dispositif selon l'une quelconque des revendications 2 à 4, dans lequel le module de contrôle (40) est configuré pour calculer des valeurs de coefficients d'une transformée de Fourier des valeurs de vitesse calculées, et pour déterminer la fréquence de vibration à partir des valeurs de coefficients calculées.

7. Dispositif selon la revendication 2, dans lequel le module de contrôle (40) est configuré pour :
- appliquer un filtrage passe-bande fréquentiel aux valeurs de vitesse calculées,
- calculer des valeurs de coefficients d'une transformée de Fourier des valeurs de vitesse filtrées,
- comparer une valeur absolue de chaque valeur de coefficient calculée à un deuxième seuil prédéterminé, et
- estimer la masse, notamment pour générer un signal à destination d'un utilisateur, en fonction du résultat de la comparaison.

8. Dispositif selon l'une quelconque des revendications précédentes, dans lequel l'actionneur (25) est configuré pour déplacer le support (15) selon une direction (D1) par rapport au bâti (15) lorsque l'actionneur (25) fait vibrer le support (20), l'accéléromètre (35) étant configuré pour mesurer des valeurs d'accélération du support (20) selon ladite direction (D1).

9. Dispositif selon l'une quelconque des revendications précédentes, dans lequel le corps (22) est une réserve d'un produit (P), le dispositif (10) comportant, en outre, un projecteur (30) configuré pour recevoir un flux du produit (P) depuis la réserve (22) et pour projeter le produit (P) reçu, le produit (P) étant notamment une poudre.

10. Procédé de mesure d'une masse d'un corps (22), mis en oeuvre par un dispositif de mesure (10) comportant un support (20) supportant le corps (22), un bâti (15) et un actionneur (25) configuré pour faire vibrer le support (20) par rapport au bâti (15), le procédé comportant des étapes de :
- mise en vibration (200), par l'actionneur (25), du support (20) par rapport au bâti (15),
- mesure (230) des valeurs d'une accélération du support (20) lors de la vibration, et
- estimation (250), par un module électronique de contrôle (40), de la masse du corps (22) à partir des valeurs d'accélération mesurées,
le procédé comportant une étape (240) de calcul de valeurs de vitesse du support (20) par rapport au bâti (15) à partir des valeurs d'accélération mesurées, la masse du corps (22) étant estimée à partir des valeurs de vitesse calculées.

11. Procédé de projection d'un produit (P), mis en oeuvre par un dispositif (10) selon la revendication 9, le support (20) supportant une réserve (22) du produit (P), le produit (P) étant notamment une poudre, le procédé comportant des étapes de :
- circulation (210) du produit (P) depuis la réserve (22) jusqu'au projecteur (30),
- projection (220), par le projecteur (30), du produit (P) reçu, et
- mise en oeuvre d'un procédé (150) de mesure de la masse d'un corps (22) selon la revendication précédente, le corps (22) étant la réserve (22) de produit (P).

## Patentansprüche

1. Vorrichtung (10) zum Messen einer Masse eines Körpers (22), die Vorrichtung (10) umfassend einen Träger (20), der geeignet ist, den Körper (22) zu tragen, ein Gestell (15) und einen Aktuator (25), der konfiguriert ist, um den Träger (20) in Bezug auf das Gestell (15) in Schwingung zu versetzen,
die Vorrichtung (10) umfassend einen Beschleunigungsmesser (35), der konfiguriert ist, um Werte einer Beschleunigung des Trägers (20) bei Vibration des Trägers (20) zu messen, und ein elektronisches Steuermodul (40) umfasst, das konfiguriert ist, um die Masse des Körpers (22) anhand der gemessenen Beschleunigungswerte zu schätzen, **dadurch gekennzeichnet, dass** das Steuermodul (40) konfiguriert ist, um anhand der gemessenen Geschwindigkeitswerte des Trägers (20) in Bezug auf das Gestell (15) zu berechnen und anhand der berechneten Geschwindigkeitswerte die Masse des Körpers (22) zu schätzen.

2. Vorrichtung nach Anspruch 1, wobei das Steuermodul (40) konfiguriert ist, um eine Vibrationsfrequenz des Trägers (20) in Bezug auf das Gestell (15) anhand der gemessenen Beschleunigungswerte zu bestimmen und die Masse des Körpers (22) anhand der bestimmten Vibrationsfrequenz zu schätzen, wobei das Steuermodul (40) konfiguriert ist, um die Vibrationsfrequenz anhand der berechneten Geschwindigkeitswerte zu bestimmen.

3. Vorrichtung nach Anspruch 2, wobei das Kontrollmodul (40) konfiguriert ist, um die bestimmte Vibrationsfrequenz mit mindestens einem ersten vorbestimmten Schwellenwert zu vergleichen und die Masse des Körpers (22) abhängig von dem Vergleich zu schätzen.

4. Vorrichtung nach Anspruch 3, wobei das Steuermodul (40) konfiguriert ist, um, wenn die Frequenz größer als oder gleich wie mindestens ein erster Schwellenwert ist, ein Signal an einen Benutzer der Vorrichtung (10) zu erzeugen.

5. Vorrichtung nach Anspruch 4, wobei das Steuermodul (40) konfiguriert ist, um die bestimmte Vibrationsfrequenz mit einer Vielzahl von ersten vorbestimmten Schwellenwerten zu vergleichen und die Masse des Körpers (22) abhängig von jedem Vergleich zu schätzen.

6. Vorrichtung nach einem der Ansprüche 2 bis 4, wobei das Steuermodul (40) konfiguriert ist, um Koeffizientenwerte einer Fourier-Transformation der berechneten Geschwindigkeitswerte zu berechnen und die Vibrationsfrequenz anhand der berechneten Koeffizientenwerte zu bestimmen.

7. Vorrichtung nach Anspruch 2, wobei das Steuermodul (40) zu Folgendem konfiguriert ist:
- Anwenden einer Frequenzbandpassfilterung auf die berechneten Geschwindigkeitswerte,
- Berechnen von Koeffizientenwerten einer Fourier-Transformation der gefilterten Geschwindigkeitswerte,
- Vergleichen eines Absolutwerts von jedem berechneten Koeffizientenwert mit einem zweiten vorbestimmten Schwellenwert, und
- Schätzen der Masse, insbesondere um abhängig von dem Resultat des Vergleichs ein Signal für einen Benutzer zu erzeugen.

8. Vorrichtung nach einem der vorherigen Ansprüche, wobei der Aktuator (25) konfiguriert ist, um den Träger (15) in einer Richtung (D1) in Bezug auf das Gestell (15) zu bewegen, wenn der Aktuator (25) den Träger (20) in Schwingung versetzt, wobei der Beschleunigungsmesser (35) konfiguriert ist, um Beschleunigungswerte des Trägers (20) in der Richtung (D1) zu messen.

9. Vorrichtung nach einem der vorherigen Ansprüche, wobei der Körper (22) eine Reserve eines Produkts (P) ist, wobei die Vorrichtung (10) ferner eine Sprüheinheit (30) umfasst, die konfiguriert ist, um einen Strom des Produkts (P) aus der Reserve (22) zu empfangen und das empfangene Produkt (P) zu sprühen, wobei das Produkt (P) insbesondere ein Pulver ist.

10. Verfahren zum Messen einer Masse eines Körpers (22), das von einer Messvorrichtung (10) durchgeführt wird, umfassend einen Träger (20), der den Körper (22) trägt, ein Gestell (15) und einen Aktuator (25), der konfiguriert ist, um den Träger (20) in Bezug auf das Gestell (15) in Schwingung zu versetzen, das Verfahren umfassend die folgenden Schritte:
- Vibrieren (200), durch den Aktuator (25), des Trägers (20) in Bezug auf das Gestell (15),
- Messen (230) der Werte einer Beschleunigung des Mediums (20) während der Vibration, und
- Schätzen (250), durch ein elektronisches Steuermodul (40), der Masse des Körpers (22) anhand der gemessenen Beschleunigungswerte, das Verfahren umfassend einen Schritt (240) eines Berechnens von Geschwindigkeitswerten des Trägers (20) in Bezug auf das Gestell (15) anhand der gemessenen Beschleunigungswerte, wobei die Masse des Körpers (22) anhand der berechneten Geschwindigkeitswerte geschätzt wird.

11. Verfahren zum Sprühen eines Produkts (P), das von einer Vorrichtung (10) nach Anspruch 9 durchgeführt wird, wobei der Träger (20) eine Reserve (22) des Produkts (P) trägt, wobei das Produkt (P) insbesondere ein Pulver ist, das Verfahren umfassend die folgenden Schritte:
- Zirkulieren (210) des Produkts (P) von der Reserve (22) zu der Sprüheinheit (30),
- Sprühen (220) des empfangenen Produkts (P) durch die Sprüheinheit (30), und
- Durchführen eines Verfahrens (150) zum Messen der Masse eines Körpers (22) nach dem vorherigen Anspruch, wobei der Körper (22) die Reserve (22) an Produkt (P) ist.

## Claims

1. Device (10) for measuring a mass of a body (22), the device (10) comprising a support (20) suitable for supporting the body (22), a frame (15) and an actuator (25) designed to vibrate the support (20) relative to the frame (15),
the device (10) comprising an accelerometer (35) designed to measure values of an acceleration of the support (20) during a vibration of the support (20) and an electronic control module (40) designed to estimate the mass of the body (22) from the measured acceleration values,
**characterized in that** the control module (40) is configured for calculating speed values of the support (20) relative to the frame (15) from the measured acceleration values, and for estimating the mass of the body (22) from the calculated speed values.

2. Device according to claim 1, wherein the control module (40) is designed to determine a vibration frequency of the support (20) relative to the frame (15) from the measured acceleration values, and for estimating the mass of the body (22) from the determined vibration frequency,
wherein the control module (40) is configured for determining the vibration frequency from the calculated speed values.

3. Device according to claim 2, wherein the control module (40) is designed to compare the determined vibration frequency with at least a first predetermined threshold, and to estimate the mass of the body (22) as a function of the comparison.

4. Device according to claim 3, wherein the control module (40) is designed to generate, when the frequency is greater than or equal to said at least one first threshold, a signal intended for a user of the device (10).

5. Device according to claim 4, wherein the control module (40) is designed to compare the determined vibration frequency with a plurality of first predetermined thresholds, and to estimate the mass of the body (22) as a function of each comparison.

6. Device according to any one of claims 2 to 4, in which the control module (40) is configured for calculating values of coefficients of a Fourier transform of the calculated speed values, and for determining the vibration frequency from the calculated coefficient values.

7. Device according to claim 2, wherein the control module (40) is configured for:
- applying frequency band-pass filtering to the calculated speed values,
- calculating the coefficient values of a Fourier transform of the filtered speed values,
- comparing an absolute value of each calculated coefficient value with a second predetermined threshold, and
- estimating the mass, in particular to generate a signal to a user, based on the result of the comparison.

8. Device according to any one of the preceding claims, wherein the actuator (25) is designed to move the support (15) in a direction (D1) relative to the frame (15) when the actuator (25) is vibrating the support (20), the accelerometer (35) being designed to measure acceleration values of the support (20) in said direction (D1).

9. Device according to any one of the preceding claims, wherein the body (22) is a reserve of a product (P), the device (10) further comprising a sprayer (30) designed to receive a stream of the product (P) from the reserve (22) and to spray the product (P) received, the product (P) being in particular a powder.

10. Method of measuring a mass of a body (22), implemented by a measuring device (10) comprising a support (20) supporting the body (22), a frame (15) and an actuator (25) designed to vibrate the support (20) relative to the frame (15), the method comprising the steps of:
- vibration (200), by the actuator (25), of the support (20) relative to the frame (15),
- measurement (230) of the values of an acceleration of the support (20) during vibration, and
- estimation (250), by an electronic control module (40), of the mass of the body (22) from the measured acceleration values,
the method comprising a step (240) of calculating speed values of the support (20) relative to the frame (15) from the measured acceleration values, the mass of the body (22) being estimated from the calculated speed values.

11. Method of spraying a product (P), implemented by a device (10) according to claim 9, the support (20) supporting a reserve (22) of the product (P), the product (P) being in particular a powder, the method comprising steps of:
- circulation (210) of the product (P) from the reserve (22) to the sprayer (30),
- spraying (220), by the sprayer (30), of the product (P) received, and
- implementation of a method (150) for measuring the mass of a body (22) according to the preceding claim, the body (22) being the reserve (22) of the product (P).
